# EUROPEAN PATENT SPECIFICATION

(11) **EP 4 054 311 B1**
(45) Date of publication and mention of the grant of the patent: **03.04.2024**
(21) Application number: 19829688.1
(22) Date of filing: 04.11.2019
(51) Int. Cl.: A01D 34/43, A01G 23/06

(54) **MULCHER**
MULCHER
DÉCHIQUETEUR

(43) Date of publication of application: 14.09.2022
(73) Proprietor: Cangini Benne S.R.L., 47027 Sarsina (FC) (IT)
(72) Inventor: BENDONI, Juri, 47122 FORLI' (FC) (IT); CANGINI, Davide, 47025 Mercato Saraceno (FC) (IT)
(74) Representative: Roncuzzi, Davide
(86) International application number: PCT/IT2019/000090
(87) International publication number: WO 2021/090339

(56) References cited:
- EP-A2- 2 689 656
- US-A- 2 496 022
- US-A- 4 607 799
- US-A1- 2008 000 208
- US-A1- 2008 245 043
- US-B1- 6 321 518

## Description

The present invention relates to a mulcher. In particular, the present invention regards a mulcher that can be driven by an excavator. In greater detail, the present invention regards a mulcher that can be driven by an excavator and is equipped with a cooling device.

### DESCRIPTION OF THE PRIOR ART

A mulcher is a type of agricultural machinery that is driven by a machine (usually an excavator), the aim of which is to work terrains covered with vegetation, bush, or where residues of crops are present that emerge from the soil. The aim is to render the quality of the surface of the soils to be treated uniform when it is desired to leave the residues of shredded vegetation on the ground in order to enrich the soil with naturally compostable material. These agricultural machineries comprise a box-shaped frame that supports a shredding tool provided with a plurality of radial teeth or hammer cutters that can be driven in rotation by a motor via a direct transmission or with parallel axes. Such a motor is normally hydraulically driven, and absorbs power from the hydraulic circuit of the machine through a branch duct. For this reason, the mulcher carries on board a device for distributing pressurised technical fluid, normally oil, which may have difficulty in yielding the heat absorbed during the course of the sequence of the operating cycles, inside the hydraulic circuit during use of the mulcher in particularly warm areas. In some contexts, where operation is continuous for many working hours, overheating of the hydraulic technical fluid can jeopardise the specific characteristics of the fluid, hence there is an increase in the likelihood of conditions for machine stoppage arising, with the consequent increase of unproductive running costs of such agricultural machineries and, in some cases, of the running costs due to the need arising to replace components which have proven to be unsuitable for proper operation.

To overcome this problem, it has been thought to introduce a heat-exchanger device set along the path of the oil of the hydraulic circuit of the machine, the aim of which is to lower the temperature of said oil and hence also the temperature of the hydraulic driving circuit of the mulcher. Said heat-exchanger device, provided with a tube bundle, requires an independent cooling system, which, of course, requires its own power-supply source purposely designed and installed on the machine. It is easily understood that this installation must be carried out preferably in such a way as not to cause any increase in the overall dimensions of the mulcher. One of the most practical ways for limiting the overall dimensions given by installation of the device is to mount it on the roof of the cab of the machine, even though it may well be understood that this solution in any case modifies the front section of the cab of the machine, with the result that at times this increase in the overall dimensions is incompatible with the applications of the mulcher. Examples of mulchers according to the pre-characterising portion of claim 1 are known from US 2008/000208 A1 and US 2008/245043 A1.

Considering the situation described above, it would be desirable to provide a mulcher that, in addition to limiting and possibly overcoming the drawbacks typical of the prior art illustrated above, will define a new standard for agricultural machinery of this sort.

### SUMMARY OF THE INVENTION

The present invention relates to a mulcher. In particular, the present invention regards a mulcher that can be driven by an excavator. In greater detail, the present invention regards a mulcher that can be driven by an excavator and is equipped with a cooling device.

The problems set forth above are solved by the present invention according to at least one of the ensuing claims. According to the present invention, a mulcher is provided, equipped with a frame that extends in a given direction between two respective sides; said frame supporting a wall, which extends parallel to said direction so as to delimit a shredding compartment, engaged by a shredding tool carried by said sides in an axially fixed and angularly rotatable way parallel to said given direction, with respect to a hydraulic-control compartment; said tool carrying in an axially fixed way a plurality of teeth; said frame supporting a hydraulic motor on a first side of the two said sides inside said hydraulic-control compartment; a forced-ventilation device being driven by said motor for creating a difference of air pressure inside said control compartment.

According to an embodiment of the present invention, the above motor has a drive shaft parallel to said tool and mechanically connected to the latter through a transmission device with parallel axes carried by said first side.

According to the present invention, the above ventilation device comprises a fan mechanically connected to said tool so that it can be driven thereby.

According to embodiments of the present invention, the fan is prearranged for taking in the air from outside and supplying it to said control compartment through a second side of said sides that faces said first side towards said motor.

According to an embodiment of the present invention, the above ventilation device is carried by said second side on the outside of said control compartment and said shredding compartment.

According to an embodiment of the present invention, the above ventilation device comprises: an intake chamber containing said fan and carried on the outside by said second side; and a duct delimited longitudinally by an inlet portion set inside the intake chamber and by an outlet mouth set in hydraulic communication with said second compartment on the side opposite to said motor. According to an embodiment of the present invention, the above intake chamber is closed on the outside by a lid provided with a plurality of slits.

According to another embodiment of the present invention, said second compartment contains a plurality of hydraulic supply ducts hydraulically connected to said motor for the respective driving on said second side.

According to yet a further embodiment of the present invention, a mulcher is provided in which said ventilation device comprises a ventilation channel delimited longitudinally by said wall, and axially by said first side and is in air communication with said control compartment.

According to an embodiment of the present invention, said channel is delimited by a side wall that carries a flap that is folded inwards, which delimits said channel at the top up to said wall, and is provided with a plurality of through-holes for setting said channel and said control compartment in air communication.

According to an embodiment of the present invention, said ventilation device comprises: a fan coaxial with a driven pulley; and a duct delimited longitudinally by an inlet portion set inside said motor compartment and by an outlet mouth set in hydraulic communication with said channel through a hole made in said first side.

### BRIEF DESCRIPTION OF THE DRAWINGS

Further characteristics and advantages of the mulcher according to the present invention will emerge more clearly from the ensuing description, provided with reference to the annexed drawings, which illustrate some non-limiting embodiments thereof, where parts of the device that are identical or correspond to one another are designated by the same reference numbers. In particular:
- Figure 1 is a schematic perspective view of a first preferred embodiment of a mulcher according to the present invention;
- Figure 2 is a perspective view from the side opposite to that of Figure 1 with parts removed for clarity and on an enlarged scale;
- Figure 3 is a view of Figure 2, with parts removed for clarity;
- Figure 4 is a view of Figure 1 rotated about a vertical axis and with parts removed for clarity;
- Figure 5 illustrates a bottom portion of Figure 1 on an enlarged scale and with parts removed for clarity;
- Figure 6 is an exploded view of a device appearing in Figure 4;
- Figure 7 is a view from above of Figure 5, with parts removed for clarity;
- Figure 8 is a schematic perspective view of a second preferred embodiment of Figure 1;
- Figure 9 shows a portion of Figure 8, with parts removed for clarity and on an enlarged scale;
- Figure 10 is a rotated view of Figure 8 on an enlarged scale and with parts removed for clarity; and
- Figure 11 is a view rotated in a counterclockwise direction and on an enlarged scale of a portion of Figure 10.

### DETAILED DESCRIPTION OF THE PRESENT INVENTION

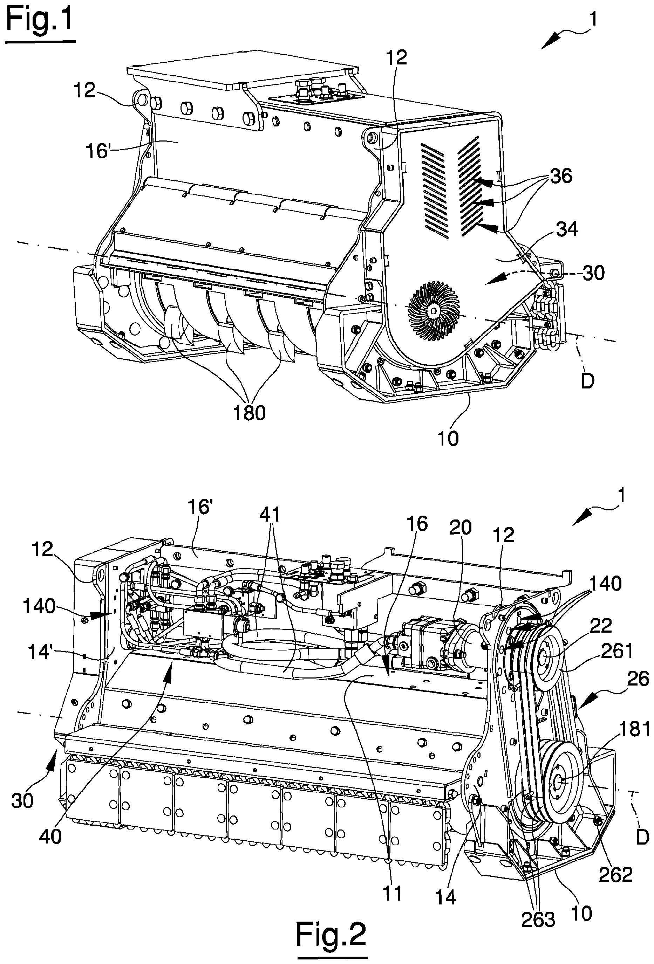

In Figure 1, designated as a whole by 1 is a mulcher, equipped with a box-shaped frame 10 that extends in a given direction D, is provided at the top with eyebolts 12 for transport and/or engagement to a known machine (not illustrated), normally an excavator. The frame develops between a first side 14 and a second side 14' that face another and supports a wall 11 obtained with a metal plate that extends along the direction D for delimiting a shredding compartment 15 with respect to a hydraulic-control compartment 16, which is set underneath the shredding compartment in the annexed figures and is delimited by two opposed side walls, only one of which is visible in the annexed Figures 1-4, in particular the wall designated by 16'. As may be noted in Figure 2, the wall 11 is bent downwards on the side opposite to the wall 16' in order to maximise the volume of the control compartment 16.

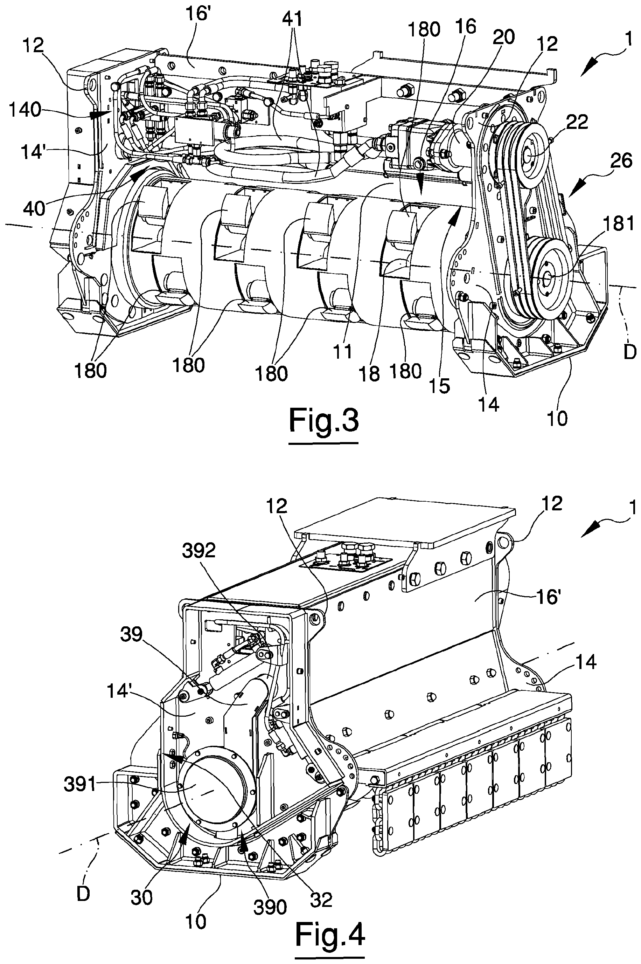

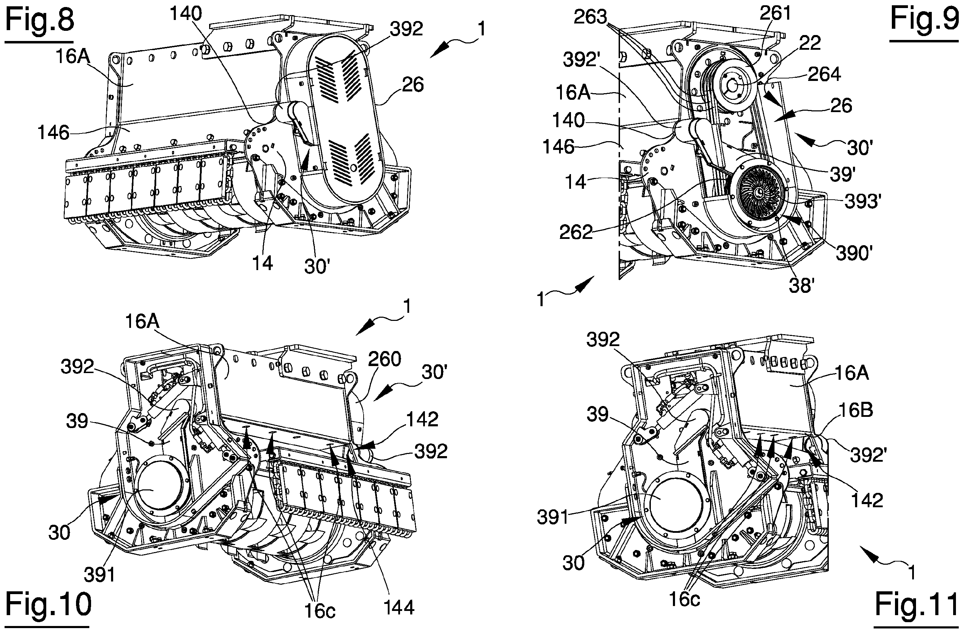

With reference to Figures 1 and 3, the shredding compartment 15 is engaged by a shredding tool 18, which is carried by the first and second sides 14 and 14' in an axially fixed and angularly rotatable way in a direction parallel to the given direction D. The tool 18 carries, in an axially fixed way, a plurality of teeth 180, which exert the shredding action. The frame 10 moreover supports a hydraulic motor 20 on the first side 14 inside the control compartment 16. This motor 20 is connected to the hydraulic circuit of the machine that drives the mulcher for its own supply, as will be illustrated more fully hereinafter. On the other side, the motor 20 is provided with a drive shaft 22, which is parallel to the tool 18 and is mechanically connected to the latter through a transmission device 26 with parallel axes carried by the first side 14 inside a motor compartment 264 closed by a casing 260 provided with a plurality of slits. The compartment 264 and the casing 260 are visible only in Figures 8 and 9 to limit the number of drawings. With reference to Figures 2 and 3, the transmission device 26 comprises two pulleys, namely, a drive pulley 261 and a driven pulley 262, in so far as the pulley 261 is coaxial with the shaft 22 of the motor 20, whereas the pulley 262 is coaxial with the tool 18 and is fitted on a shaft 181 that is coaxial with the tool 18 and has an end visible only in Figure 2. The two pulleys 261 and 262 are coupled in rotation by a plurality of transmission belts 263.

With particular reference to Figures 2 and 3, the second compartment 16 contains a supply assembly 40, which is located on the second side 14' and is connected to the hydraulic circuit, known and not illustrated, of the machine. The supply assembly 40 comprises hydraulic ducts 41 hydraulically connected to the motor 20 for driving of the latter. In light of what has been described above, the supply assembly 40 and the motor 20 are set on opposite sides of the control compartment 16 of the mulcher and hence determine a temperature gradient inside said control compartment 16, the temperature rising from the second side 14' to the first side 14, where the motor 20 is located.

With particular reference to Figure 4, the mulcher 1 comprises a forced-ventilation device 30, which is carried by the second side 14' of the frame 10 and is mechanically connected to the tool 18 on the side opposite to the motor 20 for taking in air from outside and supplying it to the control compartment 16, and thus mitigate the temperature gradient thereof. On account of this constructive characteristic, which will be more fully illustrated hereinafter, it can thus be stated that the forced-ventilation device 30 is integrated in the mulcher 1 and does not require a dedicated actuation unit, thus optimising the energy consumption of the equipment.

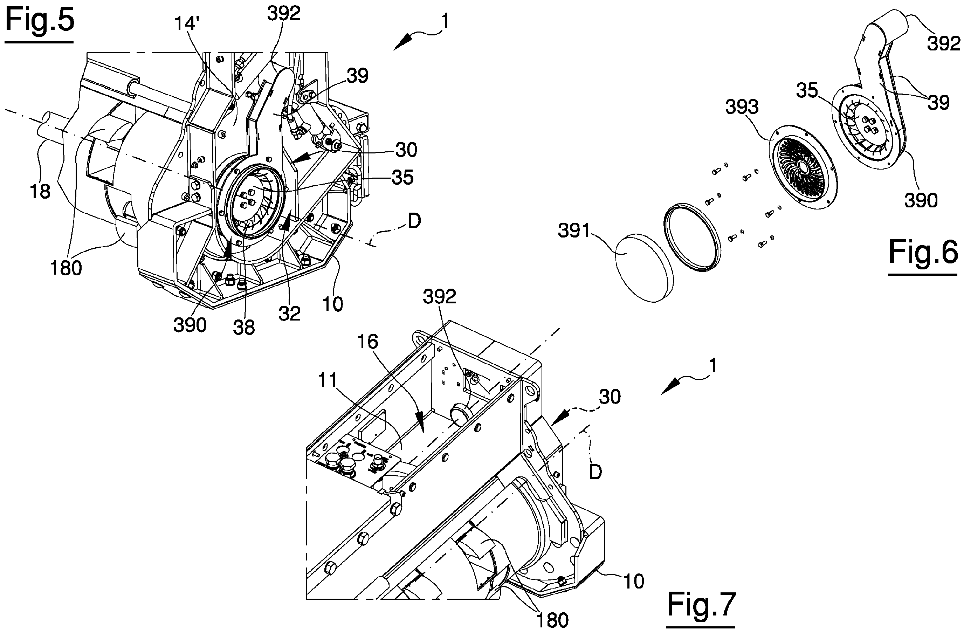

As emerges from Figure 5, the forced-ventilation device 30 comprises a box-shaped intake chamber 32, which is carried on the outside by the second side 14' and is closed on the outside by a lid 34 (Figure 1), which is connected to the second side 14' in such a way that it can be selectively released through the threaded connections and is provided with a plurality of slits 36 that open the intake chamber 32 to the outside. The ventilation device 30 further comprises a centrifugal fan 38, which is contained inside the intake chamber 32 and is coaxial with, and rigidly coupled to, the tool 18. The connection between the tool 18 and the fan 38 is ensured by a fixing member 35 (Figures 5 and 6). The ventilation device 30 further comprises a duct 39 set between the rotation axis of the tool 18 and the rotation axis of the motor 20 and substantially S-shaped so as have limited axial overall dimensions. Said duct 39 extends between an inlet portion 390 set inside the intake chamber 32 and protected by a lid 391 constituted by a filter made of open-cell sponge (Figures 4 and 6), and an outlet mouth 392, which is set in hydraulic communication with the second compartment 16. In particular, the first inlet portion 390 contains the fan 38, which is of a centrifugal type and is hence designed to take in air peripherally from the inlet portion 390 of the duct 39. On the other side, the air supplied by the mouth 392 to the control compartment 16 is expelled from the latter through a plurality of holes 140 made in the first side 14, more clearly visible in Figure 2. Between the lid 391 and the fan 38, the ventilation device 30 comprises a filter-holder lid 393, visible only in Figure 6.

The use of the mulcher 1 implemented according to the dictates of the present invention is easily understood from the foregoing description and does not require further explanation. In light of what has been described above, the purpose of said ventilation device 30 is to take in fresh air through the slits 36 and supply it to the inside of the control compartment 16 on the second side 14' to cool it. Moreover, it may be useful to point out that in use the amount of power necessary for driving the fan 38 is minimal if compared with the amount necessary for driving the tool 18 during the shredding operations, which hence are not affected by said absorption of power. In addition, the position of the ventilation device 30 on the side the second compartment 14' is particularly suitable because the air blown by the fan 38 into the control compartment 16 firstly removes heat from an area with the temperature lower than the temperature in the area it will traverse when it reaches the control compartment 16 on the first side 14 where it will still have a sufficient capacity for removing the heat produced by the motor 20 at a higher temperature.

Finally, it is clear that modifications and variations may be made to the mulcher 1 described and illustrated herein, without thereby departing from the scope of the present invention.

For instance, with reference to Figure 8, a variant of the mulcher 1 is illustrated, in which a ventilation device 30' is installed, that is basically identical to the ventilation device 30 in combination with the transmission device 26 with parallel axes, hence on the first side 14, namely, on the side of the motor 20. Of course, the ventilation device 30' can be installed on the mulcher 1 either as a single ventilation device or in combination with the ventilation device 30, as emerges in Figures 10 and 11, according to the customer's specific requirements. With reference to Figures 8 and 9, the side 14 has been modified with respect to that of the version described previously, as likewise the casing 260, in order to provide space for an outlet mouth 392' of the ventilation device 30'. Moreover, the side 14 is here provided with a lobe 140 having a hole 142 for coupling with the air-tight mouth 392'. In particular, the ventilation device 30' comprises a longitudinal ventilation channel 144, which is axially delimited by the first side 14, communicates with the hole 142 and is delimited, longitudinally and underneath, by the wall 11, and in particular by the respective part inclined downwards. The channel 144 is moreover delimited on the outside by a side wall 16A opposite to the wall 16', and carries a flap 16B bent towards the inside of the control compartment 16 for delimiting the channel 144 at the top as far as the wall 11. With particular reference to Figures 10 and 11, said flap 16B is provided with a plurality of through-holes 16C, distributed longitudinally for setting the channel 144 in communication with the control compartment 16. In light of what has been described above, the channel 144 has a constant cross section; it is hence shaped like a prism and is closed on the outside by a plate 146, which extends longitudinally underneath the side wall 16A.

On the other hand, it should be pointed out that in this case the ventilation device 30' comprises a fan 38' that corresponds to the fan 38 and is rigidly connected to the pulley 262, and is hence coaxial with the tool 18 and mechanically coupled to the shaft 181. In Figure 9 the fan 38' is visible only partially in so far as it is hidden by a filter-holder lid 393', the purpose of which is to protect the fan 38'. Also in this embodiment, the air taken in from outside by the fan 38' through the filter 393' is supplied to the mouth 392' through a duct 39', which extends between an inlet portion 390' set inside the motor compartment 264 and is protected by a lid altogether similar to the lid 391 but not illustrated to limit the number of drawings. The filter 393', the mouth 392', and the duct 39' are shaped exactly like the homologous components of the ventilation device 30, without this limiting the scope of the present invention.

On the basis of what has been described above, it is easy to understand that the idea of incorporating at least one forced-ventilation device inside the frame of the mulcher 1 enables removal of heat from the oil, which drives the motor 20 and which proceeds with its cycle in the hydraulic circuit of the machine to which the mulcher 1 is connected, with the result of reducing drastically the risk of machine stoppage and the corresponding negative effects of a management nature, without increasing the overall dimensions of the mulcher at the front or at the sides. Then, considering that the design choices implemented do not require modification of the mechanical structure or increase the power levels involved, which are already considerable on account of the type of operations carried out by mulchers, the mulcher 1 represents an example of how it is possible to solve the problems of the prior art in a simple and inexpensive way.

## Claims

1. A mulcher (1) equipped with a frame (10) that extends in a given direction (D) between two respective sides (14) (14'); said frame (10) supporting a wall (11) that extends parallel to said direction (D) for delimiting a shredding compartment (15) engaged by a shredding tool (18) carried by said sides (14) (14') in an axially fixed and angularly rotatable way parallel to said given direction (D), with respect to a control compartment (16); said tool (18) carrying a plurality of teeth (180) in an axially fixed way; said frame (10) supporting a hydraulic motor (20) on a first side (14) of the two said sides (14) (14') inside said control compartment (16); said motor (20) having a respective drive shaft (22); **characterised in that** said mulcher (1) comprises
a forced-ventilation device (30) (30') driven by said motor (20) for taking in air from the outside and supplying it to said control compartment (16);
wherein said ventilation device (30) (30') comprises a first fan (38) mechanically connected to said tool (18) so that said first fan (38) can be driven thereby.

2. The mulcher according to claim 1, **characterised in that** said motor (20) has a drive shaft (22) parallel to said tool (18) and mechanically connected to the latter through a transmission device (26) with parallel axes, which is carried by said first side (14) inside a motor compartment (264) and comprises a drive pulley (261) coaxial with said drive shaft (22) and a driven pulley (262) coaxial with said tool (18); said pulleys (261) (262) being mechanically coupled by at least one transmission belt (263).

3. The mulcher according to claim 1 or claim 2, **characterised in that** said first fan (38) is coaxial with said tool (18), and **in that** said ventilation device (30) is prearranged for supplying air to said control compartment (16) through a second side (14') of said sides (14) (14') that faces said first side (14) towards said motor (20).

4. The mulcher according to claim 3, **characterised in that** said ventilation device (30) is carried by said second side (14') on the outside of said control compartment (16) and said shredding compartment (15).

5. The mulcher according to claim 4, **characterised in that** said ventilation device (30) comprises a first intake chamber (32), containing said fan (38) and carried on the outside by said second side (14'), and a duct (39) delimited longitudinally by an inlet portion (390) set inside said first intake chamber (32) and by an outlet mouth (392) set in hydraulic communication with said control compartment (16) through said second side (14') on the side opposite to said motor (20).

6. The mulcher according to claim 5, **characterised in that** said first intake chamber (32) is closed on the outside by a lid (34) provided with a plurality of slits (36).

7. The mulcher according to claim 6, **characterised in that** said control compartment (16) contains a plurality of hydraulic supply ducts (40) hydraulically connected to said motor (20) for the respective driving, on said second side (14').

8. The mulcher according to any one of the preceding claims, **characterised in that** said ventilation device (30') comprises a ventilation channel (144) delimited longitudinally by said wall (11) and axially by said first side (14) and is in air communication with said control compartment (16).

9. The mulcher according to claim 8, **characterised in that** said channel (144) is delimited by a side wall (16A) that carries a flap (16B) bent inwards, which delimits said channel (144) at the top up to said wall (11) and is provided with a plurality of through-holes (16C) for setting said channel (144) and said control compartment (16) in air communication with one another.

10. The mulcher according to claim 8 when depending on claim 2, **characterised in that** said ventilation device (30') comprises: a fan (38') coaxial with said driven pulley (262); and a duct (39') delimited longitudinally by an inlet portion (390') set inside said motor compartment (264) and by an outlet mouth (392') set in hydraulic communication with said channel (144) through a hole (142) made in said first side (14).

## Patentansprüche

1. Ein Mulcher (1), der mit einem Rahmen (10) ausgestattet ist, der sich in einer gegebenen Richtung (D) zwischen zwei jeweiligen Seiten (14) (14') erstreckt; wobei der Rahmen (10) eine Wand (11) stützt, die sich parallel zu der Richtung (D) zum Begrenzen eines Shredderraums (15) erstreckt, der durch ein Shredderwerkzeug (18) eingerastet ist, das durch die Seiten (14) (14') in einer axial fixierten und winkelig drehbaren Weise parallel zu der gegebenen Richtung (D), mit Bezug auf einen Steuerungsraum (16), getragen wird; wobei das Werkzeug (18) eine Vielzahl von Zähnen (180) in einer axial fixierten Weise trägt; wobei der Rahmen (10) einen Hydraulikmotor (20) auf einer Seite (14) der zwei Seiten (14) (14') innerhalb des Steuerungsraums (16) trägt; wobei der Motor (20) eine jeweilige Antriebswelle (22) aufweist;
**dadurch gekennzeichnet, dass** der Mulcher (1) Folgendes beinhaltet:
eine Zwangsbelüftungsvorrichtung (30) (30'), die durch den Motor (20) zum Aufnehmen von Luft von der Außenseite und Zuführen von dieser zu dem Steuerungsraum (16) angetrieben wird;
wobei die Belüftungsvorrichtung (30) (30') ein erstes Gebläse (38) beinhaltet, das mit dem Werkzeug (18) mechanisch gekoppelt ist, sodass das erste Gebläse (38) dadurch angetrieben werden kann.

2. Mulcher gemäß Anspruch 1, **dadurch gekennzeichnet, dass** der Motor (20) eine Antriebswelle (22) aufweist, die parallel zu dem Werkzeug (18) und mit dem Letzteren über eine Transmissionsvorrichtung (26) mit parallelen Achsen mechanisch verbunden ist, die durch die erste Seite (14) innerhalb eines Motorraums (264) getragen wird und eine Antriebsscheibe (261), die mit der Antriebswelle (22) koaxial ist, und eine angetriebene Scheibe (262), die mit dem Werkzeug (18) koaxial ist, beinhaltet; wobei die Scheiben (261) (262) durch mindestens einen Transmissionsriemen (263) mechanisch gekoppelt sind.

3. Mulcher gemäß Anspruch 1 oder Anspruch 2, **dadurch gekennzeichnet, dass** das erste Gebläse (38) mit dem Werkzeug (18) koaxial ist und dass die Belüftungsvorrichtung (30) zum Zuführen von Luft zu dem Steuerungsraum (16) über eine zweite Seite (14') der Seiten (14) (14'), die der ersten Seite (14) zu dem Motor hin (20) zugewandt ist, vorangeordnet ist.

4. Mulcher gemäß Anspruch 3, **dadurch gekennzeichnet, dass** die Belüftungsvorrichtung (30) durch die zweite Seite (14') auf der Außenseite des Steuerungsraums (16) und des Shredderraums (15) getragen wird.

5. Mulcher gemäß Anspruch 4, **dadurch gekennzeichnet, dass** die Belüftungsvorrichtung (30) Folgendes beinhaltet: eine erste Einlasskammer (32), die das Gebläse (38) enthält und auf der Außenseite der zweiten Seite (14') getragen wird, und eine Leitung (39), die längs durch einen Eintrittsabschnitt (390), der innerhalb der ersten Einlasskammer (32) eingerichtet ist, und durch einen Austrittsmund (392), der in Hydraulikkommunikation mit dem Steuerungsraum (16) über die zweite Seite (14') auf der dem Motor (20) gegenüberliegenden Seite eingerichtet ist, begrenzt ist.

6. Mulcher gemäß Anspruch 5, **dadurch gekennzeichnet, dass** die erste Einlasskammer (32) auf der Außenseite durch einen Deckel (34) geschlossen ist, der mit einer Vielzahl von Schlitzen (36) versehen ist.

7. Mulcher gemäß Anspruch 6, **dadurch gekennzeichnet, dass** der Steuerungsraum (16) eine Vielzahl von Hydraulikzufuhrleitungen (40), die mit dem Motor (20) für das jeweilige Antreiben hydraulisch verbunden sind, auf der zweiten Seite (14') enthält.

8. Mulcher gemäß einem der vorhergehenden Ansprüche, **dadurch gekennzeichnet, dass** die Belüftungsvorrichtung (30') einen Belüftungskanal (144) beinhaltet, der längs durch die Wand (11) und axial durch die erste Seite (14) begrenzt ist und in Luftkommunikation mit dem Steuerungsraum (16) steht.

9. Mulcher gemäß Anspruch 8, **dadurch gekennzeichnet, dass** der Kanal (144) durch eine Seitenwand (16A) begrenzt ist, die eine nach innen gebogene Klappe (16B) trägt, die den Kanal (144) an der Oberseite bis zu der Wand (11) begrenzt und mit einer Vielzahl von Durchgangslöchern (16C) zum Einrichten des Kanals (144) und des Steuerungsraums (16) in Luftkommunikation miteinander versehen ist.

10. Mulcher gemäß Anspruch 8, wenn von Anspruch 2 abhängig, **dadurch gekennzeichnet, dass** die Belüftungsvorrichtung (30') Folgendes beinhaltet: ein Gebläse (38'), das mit der angetriebenen Scheibe (262) koaxial ist; und eine Leitung (39'), die längs durch einen Eintrittsabschnitt (390'), der innerhalb des Motorraums (264) eingerichtet ist, und durch einen Austrittsmund (392'), der in Hydraulikkommunikation mit dem Kanal (144) über ein in der ersten Seite (14) angefertigtes Loch (142) eingerichtet ist, begrenzt ist.

## Revendications

1. Une pailleuse (1) équipée d'un châssis (10) qui s'étend dans une direction (D) donnée entre deux côtés (14) (14') respectifs ; ledit châssis (10) servant de support à une paroi (11) qui s'étend parallèlement à ladite direction (D) pour délimiter un compartiment de déchiquetage (15) venant en prise avec un outil de déchiquetage (18) porté par lesdits côtés (14) (14') d'une manière axialement fixe et angulairement rotative parallèle à ladite direction (D) donnée, par rapport à un compartiment de commande (16) ; ledit outil (18) portant une pluralité de dents (180) d'une manière axialement fixe ; ledit châssis (10) servant de support à un moteur hydraulique (20) sur un premier côté (14) desdits deux côtés (14) (14') à l'intérieur dudit compartiment de commande (16) ; ledit moteur (20) ayant un arbre d'entraînement (22) respectif ;
**caractérisée en ce que** ladite pailleuse (1) comprend
un dispositif de ventilation forcée (30) (30') entraîné par ledit moteur (20) pour aspirer de l'air depuis l'extérieur et le fournir audit compartiment de commande (16) ; dans laquelle
ledit dispositif de ventilation (30) (30') comprend un premier ventilateur (38) mécaniquement raccordé audit outil (18) de sorte que ledit premier ventilateur (38) puisse être entraîné par celui-ci.

2. La pailleuse selon la revendication 1, **caractérisée en ce que** ledit moteur (20) a un arbre d'entraînement (22) parallèle audit outil (18) et mécaniquement raccordé à ce dernier par l'intermédiaire d'un dispositif de transmission (26) avec des axes parallèles, lequel est porté par ledit premier côté (14) à l'intérieur d'un compartiment de moteur (264) et comprend une poulie d'entraînement (261) coaxiale audit arbre d'entraînement (22) et une poulie entraînée (262) coaxiale audit outil (18) ; lesdites poulies (261) (262) étant mécaniquement accouplées par au moins une courroie de transmission (263).

3. La pailleuse selon la revendication 1 ou la revendication 2, **caractérisée en ce que** ledit premier ventilateur (38) est coaxial audit outil (18), et **en ce que** ledit dispositif de ventilation (30) est préagencé pour fournir de l'air audit compartiment de commande (16) par l'intermédiaire d'un deuxième côté (14') desdits côtés (14) (14') qui fait face audit premier côté (14) en direction dudit moteur (20).

4. La pailleuse selon la revendication 3, **caractérisée en ce que** ledit dispositif de ventilation (30) est porté par ledit deuxième côté (14') sur l'extérieur dudit compartiment de commande (16) et dudit compartiment de déchiquetage (15).

5. La pailleuse selon la revendication 4, **caractérisée en ce que** ledit dispositif de ventilation (30) comprend une première chambre d'admission (32), contenant ledit ventilateur (38) et portée sur l'extérieur par ledit deuxième côté (14'), et une conduite (39) délimitée longitudinalement par une portion d'entrée (390) située à l'intérieur de ladite première chambre d'admission (32) et par une bouche de sortie (392) mise en communication hydraulique avec ledit compartiment de commande (16) par l'intermédiaire dudit deuxième côté (14') sur le côté opposé audit moteur (20).

6. La pailleuse selon la revendication 5, **caractérisée en ce que** ladite première chambre d'admission (32) est fermée sur l'extérieur par un couvercle (34) pourvu d'une pluralité de fentes (36).

7. La pailleuse selon la revendication 6, **caractérisée en ce que** ledit compartiment de commande (16) contient une pluralité de conduites d'alimentation hydrauliques (40) hydrauliquement raccordées audit moteur (20) pour l'entraînement respectif, sur ledit deuxième côté (14').

8. La pailleuse selon l'une quelconque des revendications précédentes, **caractérisée en ce que** ledit dispositif de ventilation (30') comprend un canal de ventilation (144) délimité longitudinalement par ladite paroi (11) et axialement par ledit premier côté (14) et est en communication d'air avec ledit compartiment de commande (16).

9. La pailleuse selon la revendication 8, **caractérisée en ce que** ledit canal (144) est délimité par une paroi latérale (16A) qui porte un volet (16B) courbé vers l'intérieur, qui délimite ledit canal (144) au sommet jusqu'à ladite paroi (11) et est pourvu d'une pluralité de trous traversants (16C) pour mettre ledit canal (144) et ledit compartiment de commande (16) en communication d'air l'un avec l'autre.

10. La pailleuse selon la revendication 8 lorsqu'elle dépend de la revendication 2, **caractérisée en ce que** ledit dispositif de ventilation (30') comprend : un ventilateur (38') coaxial à ladite poulie entraînée (262) ; et une conduite (39') délimitée longitudinalement par une portion d'entrée (390') située à l'intérieur dudit compartiment de moteur (264) et par une bouche de sortie (392') mise en communication hydraulique avec ledit canal (144) par l'intermédiaire d'un trou (142) réalisé dans ledit premier côté (14).
